# EUROPÄISCHE PATENTANMELDUNG

(11) **EP 1 424 134 A2**
(43) Veröffentlichungstag der Anmeldung: **02.06.2004**
(21) Anmeldenummer: 03104452.2
(22) Anmeldetag: 28.11.2003
(51) Int. Cl.: B04C 9/00

(54) **Zyklonabscheider**

(30) Priorität: 29.11.2002 DE 20218590 U
(71) Anmelder: MANN+HUMMEL GmbH, 71638 Ludwigsburg (DE)
(72) Erfinder: Huurdemann, Bernhard Dr., 71691 Freiberg (DE); Wolf, Michael, 66539 Neunkirchen (DE); Greif, Volker Dr., 67376 Harthausen (DE); Thalmann, Christian, 67346 Speyer (DE); Andres, Thomas, 67240 Bobenheim (DE)

(57) **Zusammenfassung**

Ein Zyklonabscheider für die Trennung von dispergierten Stoffen aus Fluiden besitzt einen Behälter (2), der einen Einlaß (3), einen Auslaß (4) für Fluid sowie einen Auslaß (5) für abgeschiedene Stoffe besitzt. In dem Behälter (2) ist ein zylindrisches Filterelement (6) angeordnet, dessen Reinseite mit dem Auslaß (4) für Fluid in Verbindung steht und an dessen Rohseite mindestens eine Strömungsleitfläche angeordnet ist. Die Strömungsleitfläche und/oder das Filterelement (6) sind um die Längsmittelachse (7) des Filterelements (6) drehbar gelagert. Die Strömungsleitfläche ist einem oberen Haltering (8) und einem unteren Haltering (9) festgelegt. Der obere Haltering (8) und der untere Haltering (9) sind über mindestens zwei Verbindungsstreben miteinander verbunden, wobei mindestens eine Verbindungsstrebe eine Strömungsleitfläche ist.

## Beschreibung

Die Erfindung betrifft einen Zyklonabscheider für die Trennung von dispergierten Stoffen der im Oberbegriff des Anspruchs 1 angegebenen Gattung.

Aus der EP 1 062 047 B1 ist ein Zyklonabscheider mit einem Gehäuse bekannt, in dem ein Filterelement angeordnet ist. Am Außenumfang des Filterelements sind Strömungsleitvorrichtungen angeordnet, die um die Längsmittelachse des Filterelements rotierbar gelagert sind.

Der Erfindung liegt die Aufgabe zugrunde, einen Zyklonabscheider der gattungsgemäßen Art zu schaffen, der eine wirksame Abreinigung des Filterelements schon bei geringen Motordrehzahlen ermöglicht.

Diese Aufgabe wird durch einen Zyklonabscheider mit den Merkmalen des Anspruchs 1 gelöst.

Für die Verbesserung der Abreinigung des Filterelements ist der erzielbare Düseneffekt an der Strömungsleitfläche maßgeblich. Zu den wesentlichen Kriterien zur Bewertung des Düseneffekts an der Filteroberfläche durch die Strömungsleitfläche gehört die resultierende Geschwindigkeit des Fluids in radialer Richtung nach außen. Ein weiteres Kriterium ist die Verweildauer von radial nach außen beschleunigten dispergierten Feststoffen im Bereich zwischen der Filteroberfläche und der Gehäusewand. Es hat sich gezeigt, daß eine Verbesserung des Düseneffekts durch die Anordnung von mindestens zwei Verbindungsstreben zwischen dem oberen und dem unteren Haltering erreicht werden kann. Dabei ist mindestens eine Verbindungsstrebe eine Strömungsleitfläche. Die Verbesserung des Düseneffekts gewährleistet eine wirksame Abreinigung des Filterelements. Gleichzeitig kann die Rotationsgeschwindigkeit von Strömungsleitfläche und/oder Filterelement reduziert werden. Dadurch werden die wirksamen Kräfte auf die Lagerung und die durch Unwucht erzeugten Kräfte vermindert. Die elektrische Antriebsleistung und der Energieeintrag in das Fluid kann dadurch gesenkt werden. Die Bauteile des Zyklonabscheiders werden mechanisch weniger beansprucht. Dadurch steigt die Lebensdauer des Zyklonabscheiders.

Eine Verbesserung des Düseneffekts läßt sich insbesondere durch die Anordnung von mindestens vier Verbindungsstreben erzielen. Als vorteilhaft für eine Verbesserung des Düseneffekts hat sich insbesondere eine gerade Anzahl von Verbindungsstreben herausgestellt, wobei die Verbindungsstreben zweckmäßig symmetrisch um die Längsmittelachse des Filterelements angeordnet sind und sich gegenüberliegende Verbindungsstreben jeweils gleichartig ausgebildet sind. Hierdurch sind die im Betrieb auftretenden Kräfte in radialer Richtung ausgeglichen, d. h. es tritt durch die Kräfte keine Unwucht auf. Zweckmäßig haben sich gegenüberliegende Verbindungsstreben den gleichen Abstand zur Längsmittelachse. Ein guter Abreinigungseffekt läßt sich erzielen, wenn in Umfangsrichtung benachbarte Verbindungsstreben gegeneinander in radialer Richtung versetzt sind.

Um eine hohe Stabilität bei geringem Strömungswiderstand zu erreichen, ist vorgesehen, daß mindestens eine Verbindungsstrebe ein Stützprofil ist. Zweckmäßig ist mindestens eine Strömungsleitfläche ein Paddel, ein Flügel und/oder ein Blech. Das Blech ist vorteilhaft gegenüber der tangentialen Richtung zur Längsmittelachse des Filterelements angestellt. Ein gutes Abreinigungsergebnis bei geringer notwendiger Rotationsgeschwindigkeit läßt sich erzielen, wenn mindestens vier Strömungsleitflächen vorgesehen sind.

Das Filterelement umfaßt zweckmäßig eine auf einem Lochblechträger gehaltene perforierte Folie. Vorteilhaft wird der Zyklonabscheider mit einer automatischen Steuerungseinheit betrieben. Die Strömungsleitflächen und/oder das Filterelement sind insbesondere von einem Elektromotor angetrieben, der mit einem Frequenzumrichter betrieben ist. Hierdurch läßt sich auf einfache Weise eine Anpassung der Drehzahl auf den jeweiligen Anwendungsfall realisieren. Insbesondere sind Mittel zur Messung des Differenzdrucks zwischen Rohseite und Reinseite des Zyklonabscheiders und zur Anpassung der Drehzahl des Elektromotors entsprechend dem gemessenen Differenzdruck vorgesehen.

Zweckmäßig ist ein Auslaßventil zur Kontrolle des Flusses durch den Auslaß für abgeschiedene Stoffe vorgesehen. Um die Filterleistung über längere Zeiträume aufrecht erhalten zu können, müssen die bereits abgeschiedenen Stoffe abgeführt werden. Im Falle einer zu starken Aufkonzentration auf der Rohseite des Zyklonabscheiders könnte der Feststoffanteil durch die rotierende Strömungsleitfläche aufgewirbelt werden und die Oberfläche des Filterelements zusetzen. Eine ausreichende Abreinigung durch die Strömungsleitfläche könnte dann nicht mehr gewährleistet werden. Bei der dauerhaften Öffnung des Auslasses für abgeschiedene Stoffe strömt mit den abgeschiedenen Stoffen jedoch eine vergleichsweise große Menge von Rohfluid ab, das in weiteren Separationsstufen aufbereitet werden muß oder verworfen wird. Das Auslaßventil ermöglicht die Öffnung des Auslasses für abgeschiedene Stoffe derart, daß die Aufkonzentration der Feststoffe im Gleichgewicht mit der durch den Auslaß für Fluid abgeführten Fluidmenge steht. Insbesondere ist das Auslaßventil mit der Steuerungseinheit gekoppelt. Die Steuerungseinheit kann das Auslaßventil nach einer voreingestellten, zeitabhängigen Steuerung öffnen und schließen. Das Auslaßventil kann durch die Steuerungseinheit jedoch auch in Abhängigkeit des Differenzdrucks zwischen Rohseite und Reinseite geöffnet und geschlossen werden.

Ausführungsbeispiele der Erfindung werden im Folgenden anhand der Zeichnung erläutert. Es zeigen:
- Fig. 1: eine perspektivische Ansicht eines Zyklonabscheiders,
- Fig. 2: einen Längsschnitt durch den Zyklonabscheider aus Fig. 1,
- Fig. 3: eine ausschnittsweise perspektivische Darstellung von Filtermaterial,
- Fig. 4: eine schematische Darstellung eines Schnitts entlang der Linie IV-IV in Fig. 2,
- Fig. 5 - Fig. 8: Schnittdarstellungen von Zyklonabscheidern auf der Höhe der Linie IV-IV in Fig. 2.

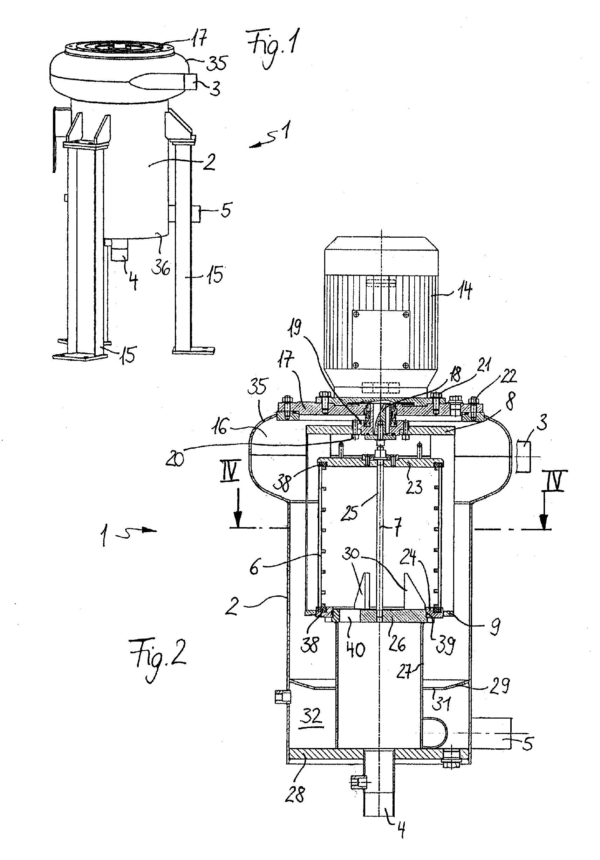

Der in Fig. 1 dargestellte Zyklonabscheider 1 besitzt einen zylindrischen Behälter 2, an dessen einem Ende ein Wulst 35 mit vergrößertem Außendurchmesser angeordnet ist. Der Wulst 35 ist durch einen Deckel 17, der sich quer zur Längsachse des Behälters 2 erstreckt, verschlossen. In den Wulst 35 mündet in tangentialer Richtung ein Einlaß 3 in den Behälter 2. An dem dem Wulst 35 gegenüberliegenden Ende 36 des Behälters 2 ist ein sich in Richtung der Längsachse des Behälters 2 erstreckender Auslaß 4 für Fluid sowie ein etwa tangential aus dem Behälter 2 mündender Auslaß 5 für abgeschiedene Stoffe angeordnet. Der Behälter 2 ist von drei Beinen 15 gehalten, die insbesondere aus U-Profilen gebildet sind und die symmetrisch im Abstand von 120° am Behälter 2 festgelegt sind. Die Beine 15 ragen dabei an dem den Auslässen 4 und 5 zugewandten Ende 36 des Behälters 2 über den Behälter 2 hinaus.

Wie im Schnitt in Fig. 2 dargestellt, mündet der Einlaß 3 in einen im Wulst 35 ausgebildeten Ringkanal 16. Durch die tangentiale Anordnung des Einlasses 3 strömt das Fluid im Behälter 2 im wesentlichen in Umfangsrichtung um die Längsmittelachse des Behälters 2. Im Behälter 2 ist ein Filterelement 6 angeordnet, dessen Längsmittelachse 7 koaxial zur Längsmittelachse des Behälters 2 angeordnet ist. Das Filterelement 6 trennt die außerhalb des Filterelements 6 gebildete Rohseite von der Reinseite auf der Innenseite des Filterelements 6. Am Außenumfang des Filterelements 6 ist mindestens eine Strömungsleitfläche angeordnet, die sich zwischen einem oberen Haltering 8 und einem unteren Haltering 9 erstreckt. Der obere Haltering 8 ist über Schrauben 20 an einem Flansch 19 fixiert, der drehfest mit der Antriebswelle 18 eines Elektromotors 14 verbunden ist. Der Elektromotor 14 ist mit Schrauben 21 auf dem Deckel 17 des Behälters 2 fixiert. Der Deckel 17 ist wiederum über Schrauben 22 drehfest mit dem Wulst 35 verbunden. Die Strömungsleitfläche zwischen dem oberen Ring 8 und dem unteren Ring 9 ist somit um die Längsmittelachse 7 des Filterelements 6 drehbar im Behälter 2 gelagert. Der untere Haltering 9 erstreckt sich außerhalb des Außenumfangs des Bodens 24 des Filterelements 6. Der aus den Ringen 8 und 9 und mindestens zwei Verbindungsstreben gebildete Rotor ist somit fliegend gelagert.

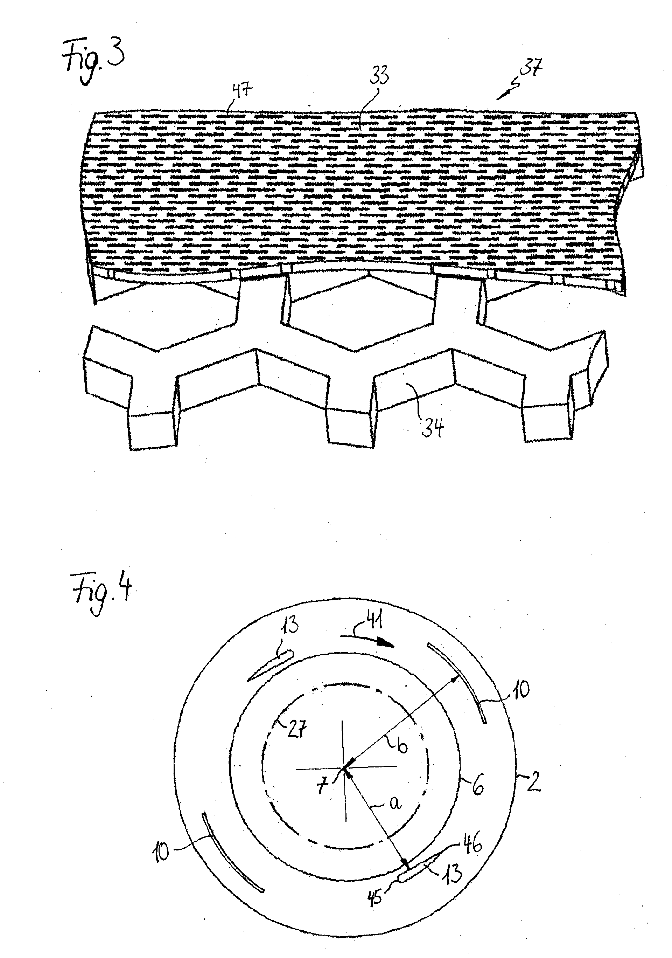

Das Filterelement 6 besitzt einen scheibenförmigen Deckel 23 und einen ringförmigen Boden 24. Zwischen diesen erstreckt sich das in Fig. 3 vergrößert dargestellte Filtermaterial 37. Das Filtermaterial 37 besteht aus einem Lochblechträger 34, der von einer perforierten Folie 33 bedeckt ist. Die in Fig. 3 dargestellte Folie ist eine Schlitzfolie mit schlitzförmigen Öffnungen 47. Die perforierte Folie kann jedoch auch runde oder hexagonale Öffnungen aufweisen. Auch andere Formen für die Öffnungen 47 können zweckmäßig sein. Das Filtermaterial 37 des Filterelements 6 erstreckt sich zylindrisch zwischen dem Boden 24 und dem Deckel 23. Das Filtermaterial 37 ist am Deckel 23 bzw. am Boden 24 im Bereich von Nuten 38 eingeleimt. Innerhalb des ringförmigen Bodens 24 erstreckt sich die scheibenförmige Bodenplatte 26, die gegenüber dem Boden 24 über einen O-Ring 39 abgedichtet ist. Die Bodenplatte 26 ist auf einem Rohr 27 fixiert, das am Boden 28 des Behälters 2 festgelegt ist und dessen Innenraum mit dem Auslaß 4 für Fluid in Verbindung steht. Hierzu ist in der Bodenplatte 26 mindestens eine Öffnung 40 vorgesehen. Auf der Bodenplatte sind keilförmige Elemente 30 angeordnet, die die Zentrierung des Filterelements 6 nach einem Filterwechsel erleichtern. Das Filterelement 6 ist über einen Bolzen 25, der sich vom Boden 23 bis zur Bodenplatte 26 erstreckt, auf der Bodenplatte 26 fixiert.

Im Behälter 2 ist ein Trichter 29 angeordnet, der sich vom Behälter 2 in Richtung auf das Rohr 27 erstreckt und der sich zum Auslaß 4 hin verengt. Zwischen dem Trichter 29 und dem Rohr 27 ist ein ringförmiger Öffnungsspalt 31 gebildet, durch den abgeschiedene Stoffe in den zwischen dem Trichter 29 und dem Boden 28 des Behälters 2 gebildeten Schmutzsammelraum 32 gelangen können. Der Schmutzsammelraum 32 ist mit dem Auslaß 5 für abgeschiedene Stoffe fluidisch verbunden.

Im Betrieb des Zyklonabscheiders 1 tritt zu separierendes Fluid durch den Einlaß 3 in den Ringraum 16. Durch die Strömungsrichtung des Fluids in Umfangsrichtung des Behälters 2 werden abzuscheidende Stoffe in den Bereich der Behälterwand beschleunigt und sinken von dort zum Trichter 29 und in den Schmutzsammelraum 32, den sie durch den Auslaß 5 verlassen. Das im Behälter 2 verbleibende Fluid tritt durch das Filterelement 6, das weitere Feststoffpartikel zurückhält. Das abgeschiedene Fluid verläßt den Zyklonabscheider 1 durch die Öffnung 40, das Rohr 27 und den Auslaß 4. Um ein Zusetzen des Filterelements 6 zu vermeiden, rotieren der obere Haltering 8 und der untere Haltering 9 mit den zwischen ihnen gehaltenen Verbindungsstreben und Strömungsleitflächen und erzeugen hierdurch einen Düseneffekt am Filterelement 6, der zur Abreinigung des Filterelements 6 führt.

Der obere Haltering 8 und der untere Haltering 9 sind über mindestens zwei, insbesondere mindestens vier Verbindungsstreben miteinander verbunden. Die Verbindungsstreben können dabei Strömungsleitflächen und/oder Stützprofile sein. In Fig. 4 ist schematisch ein Schnitt entlang der Linie IV-IV dargestellt, bei dem die Verbindungsstreben im Querschnitt sichtbar sind. Bei der Darstellung in Fig. 4 ist das Rohr 27 strichpunktiert dargestellt. Zwischen dem Filterelement 6 und dem Behälter 2 sind zwei Stützprofile 10 und zwei Flügel 13 angeordnet, die sich jeweils zwischen dem oberen Haltering 8 und dem unteren Haltering 9 erstrecken. Dabei sind die beiden Stützprofile 10 einander gegenüberliegend angeordnet. Jedes Stützprofil 10 besitzt zur Längsmittelachse 7 des Filterelements 6 einen Abstand b. Die Stützprofile 10 erstrecken sich in Umfangsrichtung zur Längsmittelachse 7. Gegenüber den Stützprofilen jeweils um 90° um die Längsmittelachse 7 gedreht sind zwei Flügel 13 angeordnet, die zur Längsmittelachse 7 einen Abstand a haben. Der Abstand a ist dabei kleiner als der Abstand b, so daß bei Rotation der Verbindungsstreben um die Längsmittelachse 7 in Richtung des Pfeils 41 hintereinanderfolgende Verbindungsstreben in radialer Richtung jeweils zueinander versetzt sind. Die Flügel 13 besitzen ein Tragflügelprofil, das an der vorlaufenden Kante 45 abgerundet ausgebildet ist und an der nachlaufenden Kante 46 spitz zuläuft. Die Flügel 13 sind gegenüberliegend voneinander angeordnet, so daß sich Auftriebskräfte an den Flügeln genau ausgleichen und keine Kräfte auf die Lagerung ausgeübt werden.

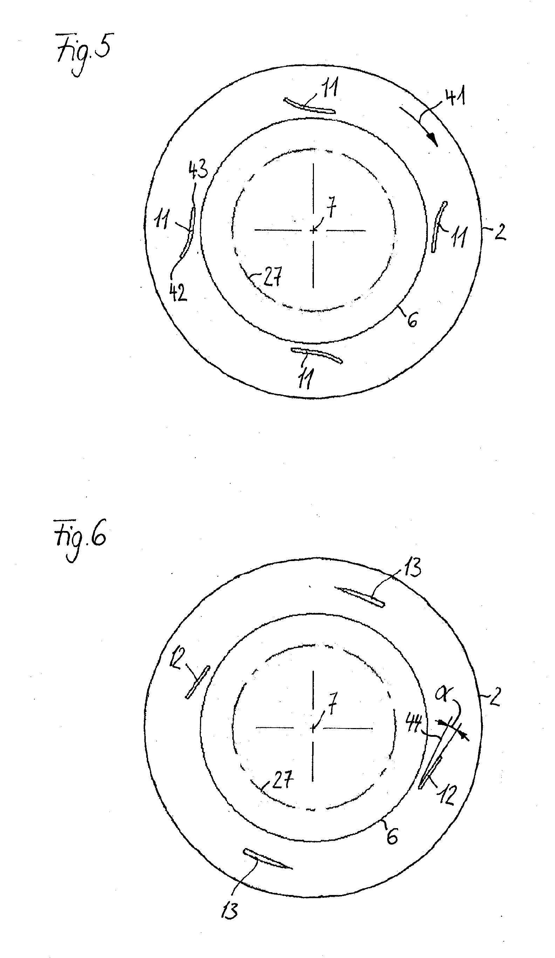

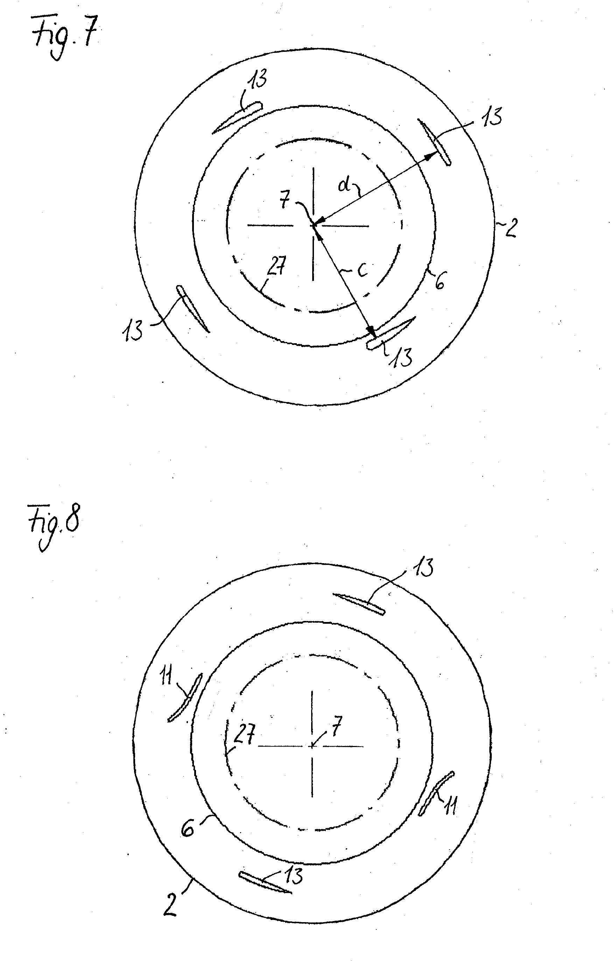

Bei dem in Fig. 5 dargestellten Ausführungsbeispiel sind symmetrisch um die Längsmittelachse 7 des Filterelements 6 vier Paddel 11 angeordnet, die bei Drehung um die Längsmittelachse 7 in Richtung des Pfeils 41 am Filterelement 6 einen Unterdruck erzeugen. Hierzu ist der Abstand der Paddel 11 zum Filterelement 6 an der nachlaufenden Kante 42 größer als an der vorlaufenden Kante 43. Die vier Paddel 11 weisen jeweils den gleichen Abstand zur Längsmittelachse 7 auf.

Bei dem Ausführungsbeispiel in Fig. 6 sind zwei Flügel 13 und zwei Bleche 12 jeweils einander gegenüberliegend angeordnet, wobei Bleche 12 und Flügel 13 um 90° um die Längsmittelachse 7 zueinander versetzt sind. Die Bleche 12 sind gegenüber der Tangentialen 44 zur Längsmittelachse 7 um einen Winkel α angestellt, der beispielsweise zwischen 3° und 10°, insbesondere etwa 5,7° beträgt. Die Flügel 13 weisen dabei zur Längsmittelachse 7 einen größeren Abstand auf als die Bleche 12.

In Fig. 7 ist ein Ausführungsbeispiel dargestellt, bei dem vier Flügel 13 im Abstand von jeweils 90° zueinander um die Längsmittelachse 7 angeordnet sind. Dabei weisen zwei der Flügel 13 einen Abstand d zur Längsmittelachse 7 auf, der größer als der Abstand c der beiden anderen Flügel 13 zur Längsmittelachse 7 ist. Die Flügel 13 sind dabei in Umfangsrichtung gesehen jeweils versetzt zueinander angeordnet, wobei gegenüberliegende Flügel zur Längsmittelachse 7 den gleichen Abstand aufweisen. Die im radial größeren Abstand d liegenden Flügel 13 besitzen dabei in radialer Richtung eine geringere Erstreckung als die im kleineren Abstand c angeordneten, radial innen liegenden Flügel 13.

Bei dem in Fig. 8 dargestellten Ausführungsbeispiel sind zwei Flügel 13 und zwei Paddel 11 jeweils gegenüberliegend angeordnet. Die Paddel 11 sind zu den Flügeln 13 jeweils im Abstand von etwa 90° angeordnet. Die Flügel 13 besitzen zur Längsmittelachse 7 einen größeren Abstand als die Paddel 11.

Bei den in den Fig. 4 bis 8 dargestellten Ausführungsbeispiele kann die Drehzahl der Strömungsleitflächen gegenüber bekannten Anordnungen um bis zu 25% reduziert werden. Dies ist zum einen darauf zurückzuführen, daß die Strömungsleitflächen, beispielsweise bei der Anordnung von zueinander versetzten Flügeln, sehr strömungsgünstig ist. Bei der Verwendung von Paddeln anstatt Flügeln kann die erforderliche Radialgeschwindigkeit des Fluids, die zur Abreinigung des Filterelements 6 notwendig ist, bereits bei kleineren Drehzahlen erreicht werden. Die Verwendung von Blechen ermöglicht zudem eine einfache Herstellung. Insbesondere sind der obere Haltering 8 und der untere Haltering 9 mit Aufnahmen ausgerüstet, die die Anordnung verschiedener Strömungsleitflächen zwischen den Halteringen erlauben. Hierdurch ist eine einfache Anpassung auf den jeweiligen Anwendungsfall ermöglicht. Auch die Anzahl der Strömungsleitflächen kann variiert werden. Es kann jedoch zweckmäßig sein, die Verbindungsstreben an den Halteringen anzulöten oder anzuschweißen. Hierdurch ergibt sich eine hohe Stabilität.

Eine gute Anpassung an den jeweiligen Anwendungsfall läßt sich durch den Betrieb des Elektromotors 14 mit einem Frequenzumrichter erreichen. Um eine automatische Anpassung zu ermöglichen, sind insbesondere Mittel zur Messung des Differenzdrucks zwischen Rohseite und Reinseite des Zyklonabscheiders 1 vorgesehen. Der Zyklonabscheider 1 besitzt beispielsweise eine automatische Steuerungseinheit, mit der die Drehzahl des Elektromotors 14 entsprechend dem Differenzdruck zwischen Rohseite und Reinseite angepaßt werden kann. Insbesondere wird die Drehzahl des Elektromotors im Falle einer übermäßigen Belegung des Filtermaterials 37 mit Feststoffen kurzzeitig erhöht. Der Düseneffekt an den Strömungsleitflächen und damit die Abreinigung des Filtermediums wird dadurch erhöht. Sobald das Filtermedium wieder frei ist, kann die Drehzahl des Elektromotors wieder abgesenkt werden. Dies wird zweckmäßig ebenfalls über eine Differenzdruckmessung zwischen Rohseite und Reinseite festgestellt. Ein optimaler Betriebspunkt des Zyklonabscheiders 1 kann erreicht werden, wenn der Auslaß 5 für abgeschiedene Stoffe mit einem Auslaßventil versehen ist. Das Auslaßventil kann entweder dauernd teilweise geöffnet sein oder zeitabhängig geöffnet und geschlossen sein. Dabei soll die Aufkonzentration der Feststoffe im Gleichgewicht mit der durch den Auslaß 4 für Fluid abgeführten Fluidmenge stehen. Das Auslaßventil kann auch in Abhängigkeit des Differenzdrucks zwischen Rohseite und Reinseite des Zyklonabscheiders geöffnet und geschlossen werden.

Es können auch andere Anordnungen der Verbindungsstreben zweckmäßig sein. So kann insbesondere eine höhere Anzahl von Strömungsleitflächen, insbesondere von mindestens vier Strömungsleitflächen, zweckmäßig sein.

## Patentansprüche

1. Zyklonabscheider für die Trennung von dispergierten Stoffen aus Fluiden, mit einem Behälter (2), der einen Einlaß (3), einen Auslaß (4) für Fluid sowie einen Auslaß (5) für abgeschiedene Stoffe besitzt, wobei in dem Behälter (2) ein zylindrisches Filterelement (6) angeordnet ist, dessen Reinseite mit dem Auslaß (4) für Fluid in Verbindung steht und an dessen Rohseite mindestens eine Strömungsleitfläche angeordnet ist, wobei die Strömungsleitfläche und/oder das Filterelement um die Längsmittelachse (7) des Filterelements (6) drehbar gelagert sind, und die Strömungsleitfläche an einem oberen Haltering (8) und einem unteren Haltering (9) festgelegt ist,
**dadurch gekennzeichnet, daß** der obere Haltering (8) und der untere Haltering (9) über mindestens zwei Verbindungsstreben (10, 11, 12, 13) miteinander verbunden sind, wobei mindestens eine Verbindungsstrebe als Strömungsleitfläche ausgebildet ist.

2. Zyklonabscheider nach Anspruch 1,
**dadurch gekennzeichnet, daß** mindestens vier Verbindungsstreben (10, 11, 12, 13) vorgesehen sind.

3. Zyklonabscheider nach Anspruch 1 oder 2,
**dadurch gekennzeichnet, daß** eine gerade Anzahl von Verbindungsstreben (10, 11, 12, 13) vorgesehen ist, die symmetrisch um die Längsmittelachse (7) des Filterelements (6) angeordnet sind, wobei sich gegenüberliegende Verbindungsstreben jeweils gleichartig ausgebildet sind.

4. Zyklonabscheider nach einem der Ansprüche 1 bis 3,
**dadurch gekennzeichnet, daß** sich gegenüberliegende Verbindungstreben den gleichen Abstand (a, b, c, d) zur Längsmittelachse (7) haben.

5. Zyklonabscheider nach einem der Ansprüche 1 bis 4,
**dadurch gekennzeichnet, daß** in Umfangsrichtung benachbarte Verbindungsstreben gegeneinander in radialer Richtung versetzt sind.

6. Zyklonabscheider nach einem der Ansprüche 1 bis 5,
**dadurch gekennzeichnet, daß** mindestens eine Verbindungsstrebe ein Stützprofil (10) ist.

7. Zyklonabscheider nach einem der Ansprüche 1 bis 6,
**dadurch gekennzeichnet, daß** mindestens eine Strömungsleitfläche ein Paddel (11) ist.

8. Zyklonabscheider nach einem der Ansprüche 1 bis 7,
**dadurch gekennzeichnet, daß** mindestens eine Strömungsleitfläche ein Blech (12) ist.

9. Zyklonabscheider nach Anspruch 8,
**dadurch gekennzeichnet, daß** das Blech (12) gegenüber der tangentialen Richtung zur Längsmittelachse (7) des Filterelements (6) angestellt ist.

10. Zyklonabscheider nach einem der Ansprüche 1 bis 9,
**dadurch gekennzeichnet, daß** mindestens eine Strömungsleitfläche ein Flügel (13) ist.

11. Zyklonabscheider nach einem der Ansprüche 1 bis 10,
**dadurch gekennzeichnet, daß** mindestens vier Strömungsleitflächen vorgesehen sind.

12. Zyklonabscheider nach einem der Ansprüche 1 bis 11,
**dadurch gekennzeichnet, daß** das Filterelement (6) eine auf einem Lochblechträger (34) gehaltene perforierte Folie (33) umfaßt.

13. Zyklonabscheider nach einem der Ansprüche 1 bis 12,
**dadurch gekennzeichnet, daß** der Zyklonabscheider (1) mit einer automatischen Steuerungseinheit betrieben ist.

14. Zyklonabscheider nach einem der Ansprüche 1 bis 13,
**dadurch gekennzeichnet, daß** die Strömungsleitflächen und/oder das Filterelement (6) von einem Elektromotor (14) angetrieben sind, der mit einem Frequenzumrichter betrieben ist.

15. Zyklonabscheider nach einem der Ansprüche 1 bis 14,
**dadurch gekennzeichnet, daß** Mittel zur Messung des Differenzdrucks zwischen Rohseite und Reinseite des Zyklonabscheiders (1) und zur Anpassung der Drehzahl des Elektromotors (14) entsprechend dem gemessenen Differenzdruck vorgesehen sind.

16. Zyklonabscheider nach einem der Ansprüche 1 bis 15,
**dadurch gekennzeichnet, daß** ein Auslaßventil zur Kontrolle des Flusses durch den Auslaß (5) für abgeschiedene Stoffe vorgesehen ist.

17. Zyklonabscheider nach Anspruch 16,
**dadurch gekennzeichnet, daß** das Auslaßventil mit der Steuerungseinheit gekoppelt ist.
